# EUROPEAN PATENT SPECIFICATION

(11) **EP 2 109 264 B1**
(45) Date of publication and mention of the grant of the patent: **06.06.2018**
(21) Application number: 08290344.4
(22) Date of filing: 09.04.2008
(51) Int. Cl.: H04L 29/06, H04L 12/915, H04L 12/911

(54) **Admission control for a multimedia gateway**
Zugangssteuerung für ein Multimedia-Gateway
Contrôle d'admission pour une passerelle multimédia

(43) Date of publication of application: 14.10.2009
(73) Proprietor: Alcatel Lucent, 91620 Nozay (FR)
(72) Inventor: Waitzmann, Carsten, 70806 Kornwestheim (DE)
(74) Representative: Wetzel, Emmanuelle

(56) References cited:
- WO-A-01/27644
- "Telecommunications and Internet converged Services and Protocols for Advanced Networking (TISPAN); Resource and Admission Control: H.248 Profile for controlling Border Gateway Functions (BGF) in the Resource and Admission Control Subsystem (RACS); Protocol specification; ETSI ES 283 018" ETSI STANDARDS, LIS, SOPHIA ANTIPOLIS CEDEX, FRANCE, vol. TISPAN, no. V2.3.0, 1 November 2007 (2007-11-01), XP014040864 ISSN: 0000-0001
- "Telecommunications and Internet Converged Services and Protocols for Advanced Networking (TISPAN); Resource and Admission Control Sub-system (RACS); Functional Architecture; Release 2; draft ETSI RES 282 003" ETSI STANDARDS, LIS, SOPHIA ANTIPOLIS CEDEX, FRANCE, vol. TISPAN, no. V0.8.9, 1 October 2007 (2007-10-01), XP014039382 ISSN: 0000-0001
- REDBACK NETWORKS: "Multiple Contexts and Virtual Interfaces" INTERNET CITATION, [Online] XP002333700 Retrieved from the Internet: URL:http://www.redback.com/resources/pdf/a ppnote-contexts.pdf> [retrieved on 2005-06-27]
- "Telecommunications and Internet converged Services and Protocols for Advanced Networking (TISPAN); NGN Functional Architecture; ETSI ES 282 001" ETSI STANDARDS, LIS, SOPHIA ANTIPOLIS CEDEX, FRANCE, vol. TISPAN, no. V2.0.0, 1 March 2008 (2008-03-01), XP014041572 ISSN: 0000-0001
- MISTRY: "The Importance of policy-based resource control in future networks" NORTON TECHNICAL JOURNAL, [Online] no. 4, August 2006 (2006-08), XP003013948 Retrieved from the Internet: URL:http://www.nortel.com/corporate/news/c ollateral/ntj4_policy.pdf> [retrieved on 2007-01-01]
- "3rd Generation Partnership Project; Technical Specification Group Services and System Aspects; Study on enhancements to IMS border functions for Interconnection of IMS based Services; (Release 9)", 3GPP STANDARD; 3GPP TR 23.848, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.5.0, 1 March 2009 (2009-03-01), pages 1-23, XP050363977,

## Description

### Background of the Invention

The invention relates to a method for performing admission control of a multimedia gateway comprising a border gateway associated with at least one IP realm, as well as to a computer program product for implementing the method. The invention further relates to a multimedia gateway, comprising: a border gateway associated with at least one IP realm and a border gateway controller for controlling the border gateway, as well as to a packet-based network comprising at least one such multimedia gateway.

Admission control techniques are well-known for technologies like ATM (Asynchronous Transfer Mode) or MPLS (Multi-protocol label switching). Multimedia gateways such as H.248 controlled Border Media Gateways are acting within Next Generation Networks (NGN) or IP Multimedia Subsystem (IMS) based network architectures as network elements controlling admitted media streams by opening and closing the corresponding pinholes residing in one or multiple IP realms. An IP realm is defined in IETF RFC 2663, clause 2.1, as a network domain in which the network addresses are uniquely assigned to entities such that datagrams can be routed to them.

In the connection model of the H.248 protocol, the main abstractions are terminations and contexts. A termination sources and/or sinks one or more streams. In a multimedia conference, a termination can be multimedia and sources or sinks multiple media streams. The media stream parameters as well as bearer parameters are encapsulated within the termination. A context consists of a collection of terminations interconnected by means of a defined topology, a termination existing only in one context at a time.

A pinhole, also referred to as a gate, is a configuration of two associated H.248 IP terminations within the same context which allows/prohibits unidirectional forwarding of IP packets under specified conditions (e.g. address tuple). Pinholes are characterized by a traffic descriptor (using e.g. SDP (session description protocol) elements or specific H.248 packages such as the H.248.53 Traffic Management packages) serving as a criteria to admit or reject requests to open pinholes as well as to monitor incoming/outgoing media streams for conformance accordingly.

Traffic related pinhole control can be basically subdivided into: Admission control taking the decision whether the request that a new pinhole can be opened (which corresponds to the creation of a new H.248 context) or modified is accepted or whether the request is rejected, and traffic management, i.e. to ensure that the media stream of an admitted pinhole behaves in conformance to the agreed-on traffic descriptor. The present application focuses on admission control in NGN/IMS networks. Document "TISPAN Resource and Admission Control: H.248 Profile for controlling Border Gateway Functions (BGF) in the RACS"; ETSI ES 283 018, no. V2.3.0, 1 November 2007, discloses a border gateway which admits or rejects requests for establishing new pinholes of for modifying existing pinholes of the IP realms (transport networks) associated with the border gateway.

Document "TISPAN Resource and Admission Control Sub-system (RACS) Functional Architecture", ETSI RES 282 003, no. V0.8.9, 1 October 2007, discloses a Service-based Policy Decision function handled in two domains which are operated by a NGN Connectivity Provider and a NGN Access Network Provider, respectively. The Admission Control is performed by the NGN Access Network Provider and may be based on available resources over the aggregation network segment.

### Object of the Invention

It is the object of the invention to provide: a method, a computer program product for performing the method, a multimedia gateway, and a packet-based network, all of which allow performing admission control in an efficient way.

### Summary of the Invention

This object is achieved by a method according to claim 1. Traditional admission control techniques are based on the physical layer or data link layer. However, in the environment of multimedia gateways of IP realms, these admission control techniques are not adequate, as they do not work on the appropriate layer. Therefore, a new, appropriate level of admission control, namely admission control on IP realms (which may represent different carrier networks) has been invented and will be described in the following.

By using the approach described above, a mechanism is provided that allows border gateways, in particular H.248 controlled border gateways, to implement admission control on the appropriate level, used to control the creation (modification) of new (existing) H.248 context, opening gates for media streams between e.g. two carrier networks by performing admission control on their IP realms, based on multiple criteria like admitted bandwidth as well as the number of admitted media streams per IP realm.

In a preferred variant, the communication between the border gateway and a border gateway controller is performed using the H.248 protocol, the admitted or rejected requests for establishing a new pinhole or for modifying an existing pinhole being chosen from creating/adding a new H.248 context / termination (stream) or modifying an existing H.248 context / termination (stream) of the border gateway. The person skilled in the art will appreciate that other communication protocols may be used for the same purpose, e.g. DIAMETER IETF RFC 3588 or COPS IETF RFC 2748.

H.248 controlled border gateways are typically located between IP realms (access/core or carrier peering) and are thus ideally suited for admission control on IP realms. Whenever a new H.248 context is created and ephemeral terminations (terminations representing ephemeral information flows, such as RTP (Real-Time Protocol) flows) are added into this context, the media gateway controller signals the media gateway the to be used IP realm by means of a H.248 property (ITU-T H.248.41 package) or by means of an identifier with the IP termination string (ETSI TISPAN Ia Profile). An access control instance may then decide if the request is admitted or rejected based on the at least one access control parameter.

In such a way, the invention provides the means for H.248 controlled border gateways, located at the boundary between different network IP realms, to take appropriate decisions from a network resource management perspective whether the opening / modification of gates / pinholes can be admitted or not, thus fulfilling the requirement to control the acceptance of new or modified media flows per IP realm representing e.g. carrier networks.

In yet another preferred variant, the border gateway comprises a plurality of virtual border gateways, the association of the virtual border gateways' H.248 terminations to the IP realms being preferably controlled by border gateway controller instances of the border gateway controller. A physical border gateway may be virtualized, each of the virtual border gateways having its own set of associated and therefore known and addressable IP realms. In particular, IP realms can be shared across multiple virtual border gateway instances or can be associated with a single virtual border gateway instance. Usually, the association of the virtual border gateways to the IP realms is provisioned by means of operational procedures. Also, each virtual border gateway instance typically has its own border gateway controller instance, the latter being usually implemented in the border gateway controller.

A second aspect of the invention is implemented in a multimedia gateway according to claim 4. In a preferred embodiment, the multimedia gateway further comprises: a communication function for performing communication between the border gateway and the border gateway controller using the H.248 protocol, the admission control function being adapted to admit or reject requests for creating / adding a new H.248 context / termination(stream) or for modifying an existing H.248 context / termination(stream) of the border gateway. In such a way, whenever a new H.248 context is created or a termination is added into it or a modification is requested, IP realm context admission control is applied and a decision is taken whether this request can be accepted or not.

In a highly preferred embodiment, the multimedia gateway comprises a plurality of virtual border gateways, the association of the IP realms to the virtual border gateways being defined by means of operational procedures, the association of H.248 terminations to the IP realms being preferably controlled by border gateway controller instances of the border gateway controller.

In a further embodiment, the border gateway comprises at least one Ethernet port associated with at least one IP realm. Typically, border gateway network elements have implemented Ethernet ports to carry media streams. In such a way, multiple IP interfaces can be created per Ethernet port belonging to multiple IP realms separated by virtual LANs (Local Area Networks).

A third aspect of the invention is realized in a packet-based network according to claim 8. In such a packet-based network, a network operator is enabled to manage the amount traffic which is admitted to be created by other carriers into its network or to manage the amount of traffic which is created by access networks.

A fourth aspect of the invention is implemented in a computer program product according to claim 9. The computer program product may be implemented as a software program being installed on the multimedia gateway, or in a suitable hardware component, such as an ASIC.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Drawings

Exemplary embodiments are shown in the diagrammatic drawing and are explained in the description below. The following are shown:
- **Fig. 1**: a schematic diagram of an embodiment of a packet-based network according to the invention with an embodiment of a multimedia gateway according to the invention, and
- **Figs. 2a,b**: a schematic diagram of a virtual border gateway with two contexts before (a) and after (b) a modification caused by admitting a request for modifying an existing context.

### Detailed Description of Preferred Embodiments

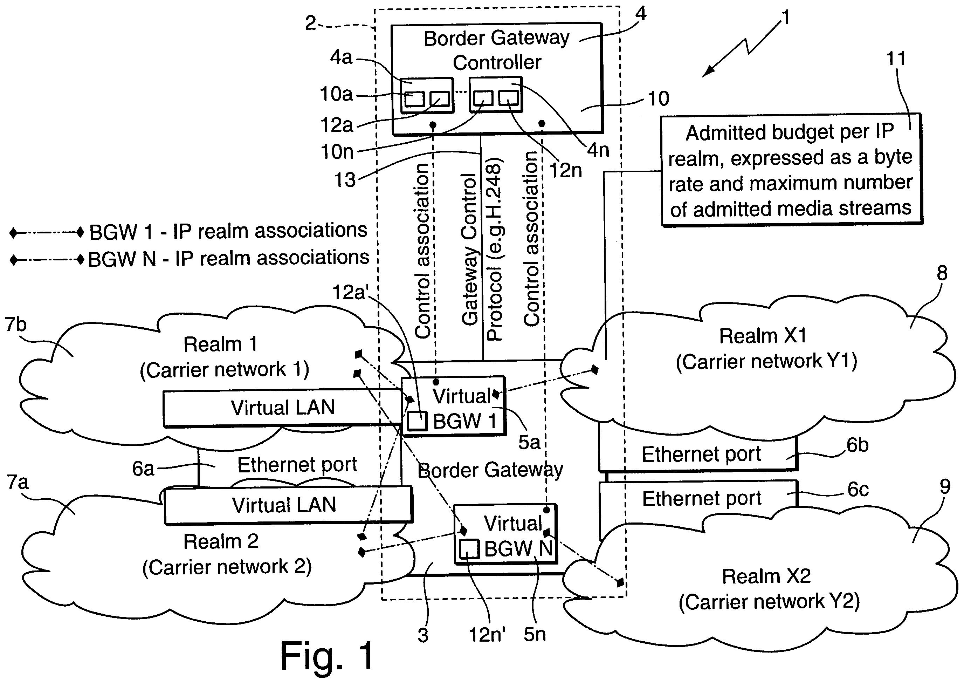

**Fig. 1** shows a packet-based network **1** which comprises a multimedia gateway **2** with a border gateway **3** and a border gateway controller **4** for controlling the border gateway 3. The border gateway 3 comprises a number **N** of virtual border gateways **5a** to **5n,** only two of which are shown in Fig. 1 for the sake of simplicity. In the border gateway controller 4, a number N of border gateway controller instances **4a** to **4n** associated with the virtual border gateways 5a to 5n is provided.

The border gateway 3 further comprises three Ethernet ports **6a** to **6c,** the first Ethernet port 6a being connected to two virtual LANs which constitute two IP realms **7a, 7b,** i.e. network domains in which the network addresses are uniquely assigned to physical entities, each of the IP realms 7a, 7b being implemented as a different carrier network (network 1 / network 2). Likewise, the second and third Ethernet ports 6b, 6c are connected each to a different IP realm **8, 9,** also implemented as carrier networks (Carrier network **Y1,** Carrier network **Y2**). The association of the IP realms 7a, 7b, 8, 9 to the H.248 terminations (not shown) of the virtual border gateways 5a to 5n are usually controlled by the border gateway controller 4 and are provisioned by means of operational procedures. The multimedia gateway 2 also comprises a communication function **13** for performing communication between the border gateway 3 and the border gateway controller 4 using the H.248 protocol.

In the border gateway controller instances 4a to 4n, a control parameter setting function **10a to 10n** for setting at least one admission control parameter **11** for at least one of the IP realms 7a, 7b, 8, 9 is provided. Moreover, admission control functions **12a to 12n** for admitting or rejecting requests for establishing new pinholes or for modifying existing pinholes between the IP realms 7a, 7b, 8, 9 associated with the border gateway 3 in dependence of the at least one admission control parameter 11 are arranged in the border gateway controller 4. The person skilled in the art will appreciate that the control parameter setting functions 11a to 11n and the admission control functions 12a to 12n, respectively, may also be implemented in the border gateway 3 of the multimedia gateway 2, as is shown for the example of the admission control functions **12a' to 12n'** in Fig. 1.

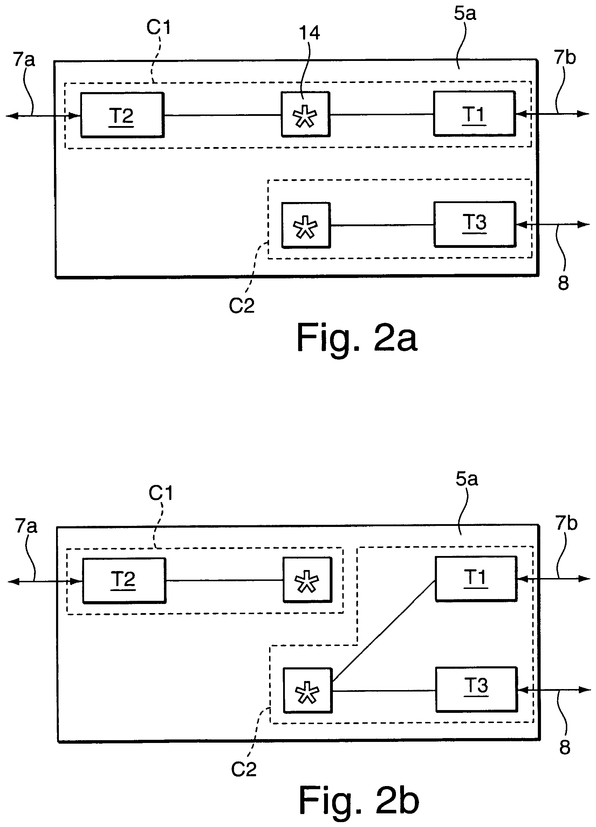

Typically, for each of the IP realms 7a, 7b, 8, 9, at least one admission control parameter 11 is set, the value of the admission control parameter 11 being provisioned from the operators of the IP realms, 7a, 7b, 8, 9. Suitable admission control parameters 11 may be an admitted media-type specific maximum bit-rate per IP realm, or admitted media formats per IP realm. In dependence of the admission control parameters, the admission control functions 12a to 12n are adapted to admit or reject requests for creating/adding a new H.248 context/termination(stream) or for modifying an existing H.248 context/termination(stream) of the border gateway 3 in a way which will be explained in the following with respect to **Figs. 2a****,b.**

Fig. 2a shows the first virtual border gateway 5a of Fig. 1 with a first and second context **C1, C2.** In the first context C1, a first and second ephemeral termination **T1, T2** of a RTP stream are arranged, each of the terminations T1, T2 being associated with a respective IP realm 7a, 7b. In the context C1, a logical association is established between the terminations T1, T2, as indicated by an asterisk box **14.** Thus, the context C1 forms an (open) pinhole / gate which provides a two-way video data stream (not shown) between the IP realms 7a, 7b. A second video data call is waiting for the termination T1 from a third ephemeral termination **T3** of the second context C2. In the exemplary scenario described herein, the first termination T1 accepts the call from the third termination T1 and places the second termination T2 on hold. This results in moving of the termination T1 from the first context C1 to the second context C2, as shown in Fig. 2b.

For creating/modifying the contexts C1, C2 (and in particular the terminations (streams) T1, T2, T3) in the way described above, based on the traffic descriptor of the particular session either the border gateway controller 4a consults its admission control function 12a or the virtual border gateway 5a consults its admission control function 12a' for checking whether or not the new termination T3 may be admitted into the context C1. The admission control function 12a or 12a', respectively, then checks the admission control parameters 11 of the IP realm 7b to which the first termination T1 is connected. Thus, by specifying suitable access control parameters an operator may efficiently manage the traffic flow traversing a carrier network by limiting the amount and/or the type of traffic entering / leaving the carrier network.

In summary, the major advantage of the admission control process described above is that admission control is enabled on a new level, which is the IP realm. This type of admission control is the key element for NGN/IMS based network resource management tasks. For example, the above approach enables a network operator to manage the amount traffic, which is admitted to be created by other carriers into its network or to manage the amount of traffic which is created by access networks. Thus, admission control on IP realms is another key element to manage and ensure Quality of Service (QoS) levels as well as service level agreements. With respect to the use of the H.248 protocol, admission control on IP realms may be implemented as a context / termination(stream) admission control, i.e. by controlling the creation / modification of H.248 contexts/terminations(streams) within a given IP realm. However, the person skilled in the art will appreciate that admission control on IP realms is by no means limited to the use of the H.248 protocol, and that other suitable protocols may be used as well for this purpose, for example the DIAMETER IETF RFC 3588 or COPS IETF RFC 2748 protocol types.

The above description of the preferred embodiments has been given by way of example. From the disclosure given, those skilled in the art will not only understand the present invention and its attendant advantages, but will also find apparent various changes and modifications to the structures and methods disclosed. The applicant seeks, therefore, to cover all such changes and modifications as fall within the scope of the invention, as defined by the appended claims.

## Claims

1. Method for performing admission control of a multimedia gateway (2) comprising a border gateway (3) associated with at least two IP realms (7a, 7b, 8, 9), the method comprising:
defining at least one admission control parameter (11) for at least one of the IP realms (7a, 7b, 8, 9), and
admitting or rejecting requests for establishing new pinholes or for modifying existing pinholes between the IP realms (7a, 7b, 8, 9) associated with the border gateway (3) in dependence of the at least one admission control parameter (11), **characterized in that** the at least one admission control parameter (11) is chosen from the group consisting of: admitted media-type specific maximum data rate per IP realm (7a, 7b, 8, 9) and admitted media formats per IP realm (7a, 7b, 8, 9).

2. Method according to claim 1, wherein the communication between the border gateway (3) and a border gateway controller (4) is performed using the H.248 protocol, the admitted or rejected requests for establishing a new pinhole or for modifying an existing pinhole being chosen from adding a new H.248 context or modifying an existing H.248 context (C1, C2) of the border gateway (3).

3. Method according to claim 1, wherein the border gateway (3) comprises a plurality of virtual border gateways (5a to 5n), the association of the virtual border gateways' H.248 terminations (T1 to T3) to the IP realms (7a, 7b, 8, 9) being preferably controlled by border gateway controller instances (4a to 4n) of the border gateway controller (4).

4. Multimedia gateway (2), comprising:
a border gateway (3) associated with at least two IP realms (7a, 7b, 8, 9),
a border gateway controller (4) for controlling the border gateway (3),
**characterized by**
a control parameter setting function (10a to 10n) for setting at least one admission control parameter (11) of at least one of the IP realms (7a, 7b, 8, 9), and
an admission control function (12a to 12n, 12a' to 12n') for admitting or rejecting requests for establishing new pinholes or modifying existing pinholes between the IP realms (7a, 7b, 8, 9) associated with the border gateway (3) in dependence of the at least one admission control parameter (11), **characterized in that** the at least one admission control parameter (11) is chosen from the group consisting of: admitted media-type specific maximum data rate per IP realm (7a, 7b, 8, 9) and admitted media formats per IP realm (7a, 7b, 8, 9).

5. Multimedia gateway according to claim 4, further comprising: a communication function (13) for performing communication between the border gateway (3) and the border gateway controller (4) using the H.248 protocol, the admission control function (12a to 12n, 12a' to 12n') being adapted to admit or reject requests for adding a new H.248 context or for modifying an existing H.248 context (C1, C2) of the border gateway (3).

6. Multimedia gateway according to claim 4, wherein the border gateway (3) comprises a plurality of virtual border gateways (5a to 5n), the association of the IP realms (7a, 7b, 8, 9) to the virtual border gateways' H.248 terminations (T1 to T3) being preferably controlled by border gateway controller instances (4a to 4n) of the border gateway controller (4).

7. Multimedia gateway according to claim 4, wherein the border gateway (3) comprises at least one Ethernet port (6a to 6c) associated with at least one IP realm (7a, 7b, 8, 9).

8. Packet-based network (1), comprising:
a plurality of IP realms (7a, 7b, 8, 9), and
a multimedia gateway (2) according to claim 4 located at the border between at least two of the IP realms (7a, 7b, 8, 9).

9. Computer program product comprising code, which, when the code is executed by a computer, cause the computer to carry out the steps of the method according to claim 1.

## Patentansprüche

1. Verfahren zum Durchführen einer Zugangskontrolle eines Multimedia-Gateways (2), das ein Border-Gateway (3) umfasst, das zu wenigstens zwei IP-Realms (7a, 7b, 8, 9) zugehörig ist, wobei das Verfahren umfasst:
Definieren von wenigstens einem Zugangskontrollparameter (11) für wenigstens eins der IP-Realms (7a, 7b, 8, 9) und
Zulassen oder Zurückweisen von Anforderungen zum Erstellen neuer Pinholes oder Modifizieren existierender Pinholes zwischen den IP-Realms (7a, 7b, 8, 9), die dem Border-Gateway (3) zugehörig sind, in Abhängigkeit von dem wenigstens einen Zugangskontrollparameter (11), **dadurch gekennzeichnet, dass** der wenigstens eine Zugangskontrollparameter (11) ausgewählt wird aus der Gruppe bestehend aus: einer zugelassenen medientypspezifischen maximalen Datenrate pro IP-Realm (7a, 7b, 8, 9) und zugelassenen Medienformaten pro IP-Realm (7a, 7b, 8, 9).

2. Verfahren nach Anspruch 1, wobei die Kommunikation zwischen dem Border-Gateway (3) und einem Border-Gateway-Controller (4) unter Verwendung des H.248-Protokolls durchgeführt wird, wobei die zugelassenen oder zurückgewiesenen Anforderungen zum Erstellen eines neuen Pinhole oder zum Modifizieren eines existierenden Pinhole aus dem Hinzufügen eines neuen H.248-Kontexts oder Modifizieren eines existierenden H.248-Kontexts (C1, C2) des Border-Gateways (3) ausgewählt werden.

3. Verfahren nach Anspruch 1, wobei das Border-Gateway (3) eine Vielzahl virtueller Border-Gateways (5a bis 5n) umfasst, wobei die Zugehörigkeit der H.248-Terminierungen (T1 bis T3) der virtuellen Border-Gateways zu den IP-Realms (7a, 7b, 8, 9) vorzugsweise durch Border-Gateway-Controller-Instanzen (4a bis 4n) des Border-Gateway-Controllers (4) gesteuert wird.

4. Multimedia-Gateway (2), umfassend:
ein Border-Gateway (3), das zu wenigstens zwei IP-Realms (7a, 7b, 8, 9) zugehörig ist,
einen Border-Gateway-Controller (4) zum Kontrollieren des Border-Gateways (3),
**gekennzeichnet durch**
eine Kontrollparametereinstellfunktion (10a bis 10n) zum Einstellen von wenigstens einem Zugangskontrollparameter (11) von wenigstens einem der IP-Realms (7a, 7b, 8, 9) und
eine Zugangskontrollfunktion (12a bis 12n, 12a' bis 12n') zum Zulassen oder Zurückweisen von Anforderungen zum Erstellen neuer Pinholes oder Modifizieren existierender Pinholes zwischen den IP-Realms (7a, 7b, 8, 9), die dem Border-Gateway (3) zugehörig sind, in Abhängigkeit von dem wenigstens einen Zugangskontrollparameter (11), **dadurch gekennzeichnet, dass** der wenigstens eine Zugangskontrollparameter (11) ausgewählt wird aus der Gruppe bestehend aus: einer zugelassenen medientypspezifischen maximalen Datenrate pro IP-Realm (7a, 7b, 8, 9) und zugelassenen Medienformaten pro IP-Realm (7a, 7b, 8, 9).

5. Multimedia-Gateway nach Anspruch 4, ferner umfassend:
eine Kommunikationsfunktion (13) zum Durchführen von Kommunikation zwischen dem Border-Gateway (3) und dem Border-Gateway-Controller (4) unter Verwendung des H.248-Protokolls, wobei die Zugangskontrollfunktion (12a bis 12n, 12a' bis 12n') dazu ausgelegt ist, Anforderungen zum Hinzufügen eines neuen H.248-Kontexts oder zum Modifizieren eines existierenden H.248-Kontexts (C1, C2) des Border-Gateways (3) zuzulassen oder zurückzuweisen.

6. Multimedia-Gateway nach Anspruch 4, wobei das Border-Gateway (3) eine Vielzahl virtueller Border-Gateways (5a bis 5n) umfasst, wobei die Zugehörigkeit der IP-Realms (7a, 7b, 8, 9) zu H.248-Terminierungen (T1 bis T3) der virtuellen Border-Gateways vorzugsweise durch Border-Gateway-Controller-Instanzen (4a bis 4n) des Border-Gateway-Controllers (4) gesteuert wird.

7. Multimedia-Gateway nach Anspruch 4, wobei das Border-Gateway (3) wenigstens einen Ethernet-Port (6a bis 6c) umfasst, der wenigstens einem IP-Realm (7a, 7b, 8, 9) zugehörig ist.

8. Paketbasiertes Netz (1), umfassend:
eine Vielzahl von IP-Realms (7a, 7b, 8, 9) und
ein Multimedia-Gateway (2) nach Anspruch 4, das an der Grenze zwischen wenigstens zwei IP-Realms (7a, 7b, 8, 9) angeordnet ist.

9. Computerprogrammprodukt, Code umfassend, der, wenn der Code durch einen Computer ausgeführt wird, den Computer veranlasst, die Schritte des Verfahrens nach Anspruch 1 auszuführen.

## Revendications

1. Procédé destiné à réaliser un contrôle d'admission d'une passerelle multimédia (2) comprenant une passerelle frontière (3) associée à au moins deux domaines IP (7a, 7b, 8, 9), le procédé comprenant les étapes suivantes :
définir au moins un paramètre de contrôle d'admission (11) pour au moins l'un des domaines IP (7a, 7b, 8, 9), et
admettre ou rejeter des demandes d'établissement de nouveaux trous d'épingle ou de modification de trous d'épingle existants entre les domaines IP (7a, 7b, 8, 9) associés à la passerelle frontière (3) en fonction du ou des paramètres de contrôle d'admission (11), **caractérisé en ce que** le ou les paramètres de contrôle d'admission (11) sont choisis dans le groupe constitué des éléments suivants : débit de données maximum spécifique au type média admis par domaine IP (7a, 7b, 8, 9) et formats de support admis par domaine IP (7a, 7b, 8, 9).

2. Procédé selon la revendication 1, dans lequel la communication entre la passerelle frontière (3) et un contrôleur de passerelle frontière (4) est réalisée à l'aide du protocole H.248, les demandes d'établissement de nouveaux trous d'épingle ou de modification de trous d'épingle existants acceptées ou rejetées étant choisies parmi l'ajout d'un nouveau contexte H.248 ou la modification d'un contexte H.248 existant (C1, C2) de la passerelle frontière (3).

3. Procédé selon la revendication 1, dans lequel la passerelle frontière (3) comprend une pluralité de passerelles frontière virtuelles (5a à 5n), l'association des terminaisons H.248 (T1 à T3) des passerelles frontière virtuelles aux domaines IP (7a, 7b, 8, 9) étant contrôlée de préférence par des instances de contrôleur de passerelle frontière (4a à 4n) du contrôleur de passerelle frontière (4).

4. Passerelle multimédia (2), comprenant :
une passerelle frontière (3) associée à au moins deux domaines IP (7a, 7b, 8, 9),
un contrôleur de passerelle frontière (4) destiné à contrôler la passerelle frontière (3), **caractérisé par**
une fonction de configuration de paramètre de contrôle (10a à 10n) destinée à configurer au moins un paramètre de contrôle d'admission (11) du ou des domaines IP (7a, 7b, 8, 9), et
une fonction de contrôle d'admission (12a à 12n, 12a' à 12n') destinée à admettre ou rejeter des demandes d'établissement de nouveaux trous d'épingle ou de modification de trous d'épingle existants entre les domaines IP (7a, 7b, 8, 9) associés à la passerelle frontière (3) en fonction du ou des paramètres de contrôle d'admission (11), **caractérisée en ce que** le ou les paramètres de contrôle d'admission (11) sont choisis dans le groupe constitué des éléments suivants : débit de données maximum spécifique au type média admis par domaine IP (7a, 7b, 8, 9) et formats de support admis par domaine IP (7a, 7b, 8, 9).

5. Passerelle multimédia selon la revendication 4, comprenant en outre : une fonction de communication (13) destinée à réaliser une communication entre la passerelle frontière (3) et le contrôleur de passerelle frontière (4) à l'aide du protocole H.248, la fonction de contrôle d'admission (12a à 12n, 12a' à 12n') étant adaptée pour admettre ou rejeter des demandes d'ajout de nouveau contexte H.248 ou de modification de contexte H.248 existant (C1, C2) de la passerelle frontière (3).

6. Passerelle multimédia selon la revendication 4, dans laquelle la passerelle frontière (3) comprend une pluralité de passerelles frontière virtuelles (5a à 5n), l'association des domaines IP (7a, 7b, 8, 9) aux terminaisons H.248 (T1 à T3) des passerelles frontière virtuelles étant contrôlée de préférence par des instances de contrôleur de passerelle frontière (4a à 4n) du contrôleur de passerelle frontière (4).

7. Passerelle multimédia selon la revendication 4, dans laquelle la passerelle frontière (3) comprend au moins un port Ethernet (6a à 6c) associé à au moins un domaine IP (7a, 7b, 8, 9).

8. Réseau à commutation de paquets (1), comprenant :
une pluralité de domaines IP (7a, 7b, 8, 9), et
une passerelle multimédia (2) selon la revendication 4 située à la frontière entre au moins deux des domaines IP (7a, 7b, 8, 9).

9. Produit-programme informatique comprenant un code, qui, lorsque le code est exécuté par un ordinateur, commande à l'ordinateur de mettre en oeuvre les étapes du procédé selon la revendication 1.
